# FASCICULE DE BREVET EUROPEEN

(11) **EP 1 814 094 B1**
(45) Date de publication et mention de la délivrance du brevet: **16.03.2011**
(21) Numéro de dépôt: 07300731.2
(22) Date de dépôt: 16.01.2007
(51) Int. Cl.: G08B 25/08, G07C 5/00, H04M 11/04

(54) **Système et procédé d'identification de caractéristiques d'un véhicule, et centre collecteur, centre d'information pour ce système**
System und Verfahren zur Identifizierung von Merkmalen eines Fahrzeugs und Datensammelzentrum, Informationszentrum für dieses System
System and method of identifying the characteristics of a vehicle and collecting centre, information centre for this system

(30) Priorité: 30.01.2006 FR 0600827
(43) Date de publication de la demande: 01.08.2007
(73) Titulaire: Peugeot Citroën Automobiles SA, 78140 Velizy Villacoublay (FR)
(72) Inventeur: Bonnefous, Thierry, 92800 Puteaux (FR)
(74) Mandataire: Couillard, Yann Luc Raymond

(56) Documents cités:
- US-A1- 2002 103 577
- US-A1- 2005 040 937

## Description

La présente invention concerne un système et un procédé d'identification de caractéristiques d'un véhicule, et un centre collecteur d'informations pour ce système.

Il existe des systèmes d'identification à distance de caractéristiques techniques d'un véhicule automobile déterminé parmi l'ensemble des véhicules automobiles d'un parc automobile comportant :
- au moins une unité télématique embarquée dans le véhicule automobile déterminé, cette unité télématique étant propre à envoyer un identifiant du véhicule automobile à un centre collecteur des appels de l'ensemble des véhicules du parc automobile par l'intermédiaire d'une liaison sans fil et d'un réseau grande distance de transmission d'informations, et
- le centre collecteur des appels, ce centre étant propre à identifier au moins une caractéristique du véhicule automobile à partir de l'identifiant du véhicule.

Un tel système d'identification est, par exemple, divulgué dans la demande de brevet US 2005/00 40937 au nom de CUDDIHY. Dans cette demande de brevet, l'identifiant du véhicule automobile est décodé afin de déterminer la marque, le modèle et la couleur du véhicule automobile.

Dans les systèmes existants, les autres caractéristiques techniques du véhicule sont identifiées à partir de capteurs ou de mémoires embarqués dans ce véhicule automobile.

Dans ces systèmes existants, s'il s'avère nécessaire d'identifier une nouvelle caractéristique technique, alors il est nécessaire d'ajouter dans le véhicule automobile un capteur propre à mesurer cette nouvelle caractéristique technique ou d'enregistrer cette nouvelle caractéristique technique dans l'une des mémoires du véhicule automobile. Il est également nécessaire de modifier l'unité télématique pour que celle-ci soit apte à envoyer cette nouvelle caractéristique technique. Ces adaptations du véhicule automobile pour envoyer cette nouvelle caractéristique technique sont longues à mettre en oeuvre et coûteuses, surtout si cela doit être réalisé pour chacun des véhicules du parc automobile.

On connait d'autre part des systèmes de consultation de bases de données, permettant à part du numéro d'identification d'un véhicule de consulter ses caractéristiques, voir US 2002/0103577.

L'invention vise à remédier à cet inconvénient en proposant un système d'identification à distance des caractéristiques techniques d'un véhicule dans lequel les modifications à réaliser pour identifier une nouvelle caractéristique technique sont plus simples à mettre en oeuvre et moins coûteuses.

L'invention a donc pour objet un tel système d'identification automatique dans lequel le centre collecteur automatique des appels est adapté pour envoyer, en réponse à la réception de l'identifiant du véhicule, une requête d'obtention des caractéristiques techniques du véhicule automobile déterminé à un centre d'informations constructeur par l'intermédiaire du réseau grande distance, cette requête contenant l'identifiant du véhicule automobile déterminé, et en ce que le système comprend :
- une base de données constructeur associant à chaque identifiant d'un véhicule automobile du parc les caractéristiques techniques de ce véhicule, et
- le centre d'informations constructeur, ce centre étant adapté, en réponse à la requête d'obtention des caractéristiques techniques, pour sélectionner automatiquement, dans la base de données constructeur, les caractéristiques techniques du véhicule automobile associé à l'identifiant du véhicule automobile reçu, et à envoyer une réponse à la requête contenant les caractéristiques techniques sélectionnées.

Dans le système ci-dessus, s'il s'avère nécessaire d'identifier une nouvelle caractéristique technique du véhicule automobile, seule la requête d'obtention envoyée par le centre collecteur des appels doit être modifiée. Ceci est plus simple et moins coûteux que de modifier l'unité télématique du véhicule automobile.

Les modes de réalisation de ce système peuvent comporter une ou plusieurs des caractéristiques suivantes :
- au moins un capteur embarqué dans le véhicule automobile déterminé, et l'unité télématique embarquée est apte à envoyer en plus de l'identifiant du véhicule automobile les informations mesurées par le capteur embarqué ;
- le centre d'informations constructeur est apte à envoyer sa réponse directement vers le centre collecteur des appels et le centre collecteur des appels est apte à rediriger automatiquement cette réponse vers un centre de gestion du parc automobile agissant en fonction des caractéristiques techniques du véhicule automobile reçues ;
- une unité télématique est embarquée dans chacun des véhicules automobiles du parc ;
- les caractéristiques techniques à identifier sont choisies dans un groupe comprenant le type de motorisation du véhicule automobile, le nombre de coussins de sécurité gonflables, l'emplacement de ces coussins de sécurité gonflables dans le véhicule automobile, le nombre de portes latérales, l'absence ou la présence d'un toit ouvrant.

L'invention concerne également un centre collecteur des appels ainsi qu'un centre d'informations constructeur adaptés pour être utilisés dans le système d'identification ci-dessus.

L'invention concerne également un procédé d'identification automatique des caractéristiques techniques d'un véhicule automobile déterminé parmi l'ensemble des véhicules automobiles d'un parc automobile, caractérisé en ce que :
- une unité télématique embarquée dans le véhicule automobile déterminé envoie un identifiant du véhicule automobile à un centre collecteur des appels de l'ensemble des véhicules automobiles du parc par l'intermédiaire d'une liaison sans fil et d'un réseau grande distance de transmission d'informations,
- en réponse, le centre collecteur des appels envoie une requête d'obtention des caractéristiques techniques du véhicule automobile déterminé à un centre d'informations constructeur par l'intermédiaire du réseau grande distance, cette requête contenant l'identifiant du véhicule automobile déterminé, et
- le centre d'informations constructeur, en réponse à cette requête, sélectionne automatiquement les caractéristiques du véhicule automobile associé à l'identifiant reçu dans une base de données constructeur associant chaque identifiant d'un véhicule automobile du parc aux caractéristiques correspondantes de ce véhicule automobile, et envoie une réponse contenant les caractéristiques techniques sélectionnées.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système d'identification des caractéristiques techniques d'un véhicule automobile, et
- la figure 2 est un organigramme d'un procédé d'identification des caractéristiques techniques d'un véhicule automobile.

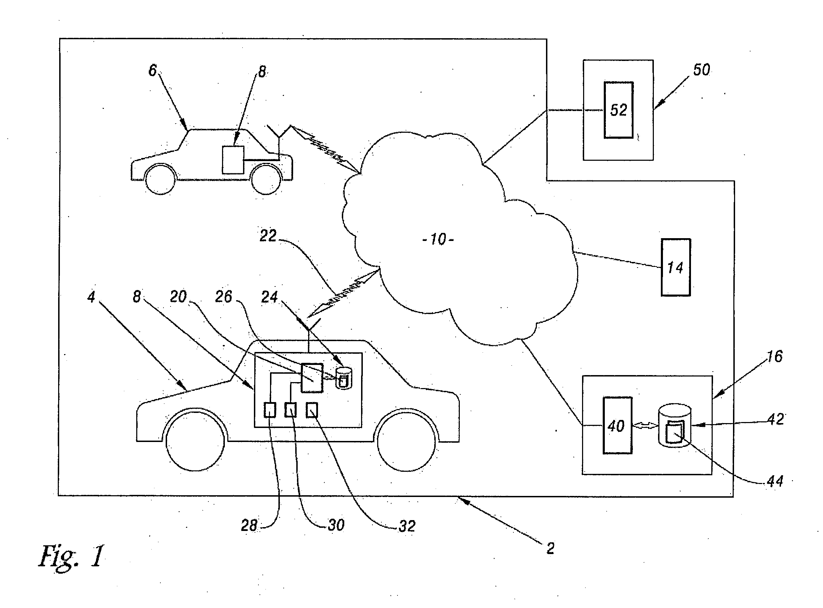

La figure 1 représente un système 2 d'identification des caractéristiques techniques d'un véhicule automobile déterminé parmi l'ensemble des véhicules automobiles d'un parc automobile.

Dans la suite de cette description, les caractéristiques et fonctions connues de l'homme du métier ne sont pas décrites en détail. De plus, pour simplifier la figure 1, seuls deux véhicules automobiles 4 et 6 du parc automobile ont été représentés.

De plus, ici à titre d'exemple, le système 2 sera décrit dans le cas particulier où la caractéristique technique du véhicule à identifier est le type de motorisation. Par type de motorisation on désigne ici :
- la nature du carburant utilisé lorsque le moteur tractant le véhicule est un moteur à combustion interne, ou
- un moteur électrique lorsque le moteur tractant le véhicule est alimenté à partir d'une batterie, ou
- une combinaison des types précédents de motorisation.

Le système 2 comprend :
- un équipement télématique 8 embarqué dans chacun des véhicules du parc,
- un réseau grande distance 10 de transmission d'informations,
- un centre 14 collecteur de l'ensemble des appels des équipements télématiques embarqués dans chacun des véhicules, et
- un centre 16 d'informations constructeur apte en réponse à une requête d'obtention de caractéristiques techniques d'un véhicule à envoyer une réponse contenant ces caractéristiques techniques.

Sur la figure 1, seul l'équipement télématique 8 du véhicule 4 est représenté en détail. Cet équipement 8 comprend une unité télématique 20 apte à envoyer un identifiant du véhicule 4 et des informations mesurées par des capteurs embarqués dans ce véhicule. A cet effet, l'unité télématique 20 est apte à se connecter au réseau 10 par l'intermédiaire d'une liaison sans fil 22 de transmission d'informations. Par contre, ici, l'unité 20 n'est pas capable d'envoyer des renseignements sur le type de motorisation du véhicule directement exploitables par un centre de gestion de ce véhicule.

L'identifiant du véhicule 4 est, par exemple, l'identifiant connu sous l'acronyme anglais VIN (Vehicle Identification Number).

L'équipement 8 comprend également :
- une mémoire 24 associée à l'unité 20 dans laquelle est enregistré l'identifiant VIN 26 du véhicule 4 ainsi que, éventuellement, d'autres données techniques sur le véhicule 4,
- un ou plusieurs accéléromètres 28,
- un ou plusieurs détecteurs 30 de déploiement du ou des coussins de sécurité gonflables, plus connus sous le terme anglais « airbag », et
- un capteur 32 de géolocalisation, tel qu'un capteur GPS (Global Positioning System).

Le réseau 10 est, par exemple, un réseau téléphonique grande distance.

Le centre collecteur 14 est apte à recevoir les informations transmises par les unités télématiques 20 embarquées dans chacun des véhicules par l'intermédiaire de la liaison sans fil 22 et du réseau 10. Le centre 14 est typiquement réalisé à partir d'un serveur informatique raccordé au réseau 10.

Le centre d'informations 16 comprend un serveur informatique 40 apte à traiter des requêtes reçues par l'intermédiaire du réseau 10, et une mémoire 42 associée au serveur 40.

La mémoire 42 contient une base de données constructeur 44 associant à chaque identifiant VIN d'un véhicule du parc l'ensemble des caractéristiques techniques de ce véhicule connues par son constructeur. En particulier, la base de données 44 comporte, par exemple, le type de motorisation du véhicule. La base de données 44 comprend également d'autres caractéristiques techniques du véhicule, telles que par exemple :
- le nombre d'airbags installés dans le véhicule,
- l'emplacement de chacun des airbags du véhicule,
- le nombre de portes latérales du véhicule,
- l'emplacement de la batterie,
- la présence ou l'absence d'un toit ouvrant.

Enfin, un centre de gestion 50 est raccordé au système 2 afin d'obtenir les caractéristiques techniques d'un ou de plusieurs des véhicules du parc automobile. Par exemple, le centre 50 est un centre d'intervention d'urgence sur les véhicules du parc automobile. Le centre d'intervention d'urgence est en particulier apte à gérer l'intervention d'unités de police, de gendarmerie, de pompiers ou de services hospitaliers en fonction des caractéristiques techniques identifiées par le système 2.

Ce centre 50 comprend un serveur informatique 52 propre à gérer l'intervention des services d'urgence sur l'un des véhicules du parc automobile en fonction des caractéristiques techniques de ce véhicule identifié par le système 2.

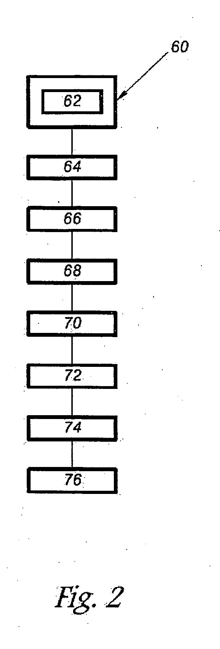

Les fonctionnalités des centres 14, 16 et 50 sont décrites plus en détail en regard de la figure 2.

Le fonctionnement du système 2 va maintenant être décrit plus en détail à l'aide du procédé de la figure 2, dans le cas particulier où le type de motorisation du véhicule 4 doit être identifié.

Initialement, lors d'une étape 60, le véhicule 4 est fabriqué par un constructeur automobile. Lors de la fabrication de ce véhicule, lors d'une opération 62, les caractéristiques techniques du véhicule fabriqué sont enregistrées dans la base de données 44 associées à l'identifiant VIN. En particulier, ici, les renseignements sur le type de motorisation du véhicule 4 sont enregistrés dans cette base de données.

Ensuite, une fois fabriqué, le véhicule 4 est mis en service.

On suppose maintenant qu'au cours de l'utilisation du véhicule 4, celui-ci est accidenté. Cet accident est détecté automatiquement, lors d'une étape 64, à partir des informations mesurées par l'accéléromètre 28 ou du détecteur 30.

En réponse à la détection d'un accident, lors d'une étape 66, l'unité télématique 20 envoie l'identifiant VIN 26, la position géographique du véhicule mesurée par le capteur 32, les informations mesurées par le capteur 28 ainsi que celles détectées par le détecteur 30. L'unité 20 envoie l'ensemble de ces informations au centre 14 par l'intermédiaire de la liaison 22 et du réseau 10.

En réponse, lorsque le centre 14 reçoit cet appel de l'unité 20, lors d'une étape 68, il envoie une requête d'obtention des caractéristiques techniques du véhicule automobile au centre 16 par l'intermédiaire du réseau 10. Cette requête d'obtention contient au moins l'identifiant VIN envoyé par le véhicule 4 lors de l'étape 66. Cette requête peut également préciser les caractéristiques techniques du véhicule à obtenir. Par exemple, ici, cette requête précise que l'on souhaite identifier le type de motorisation du véhicule 4.

Lors d'une étape 70, en réponse à cette requête, le centre 16 sélectionne dans la base de données 44 les caractéristiques techniques associées à l'identifiant VIN envoyé lors de l'étape 68. Plus précisément, lors de cette étape 70, le centre 16 sélectionne les renseignements sur le type de motorisation du véhicule 4.

Ensuite, lors d'une étape 72, le centre 16 envoie au centre 14 une réponse contenant les caractéristiques techniques sélectionnées lors de l'étape 70. Cette réponse contient donc notamment le type de motorisation du véhicule 4.

Lorsque le centre 14 reçoit cette réponse, lors d'une étape 74, il la traite. Dans le cas le plus simple, le traitement des informations consiste simplement à rediriger cette réponse vers le centre 50 par l'intermédiaire du réseau 10.

Lorsque le centre 50 reçoit les caractéristiques identifiées par le système 2, lors d'une étape 76, il agit en fonction des caractéristiques du véhicule 4 identifié par le système 2. Par exemple, les équipes d'intervention envoyées sur place seront différentes si le véhicule 4 est équipé d'un moteur à combustion interne à essence ou d'un moteur à combustion interne au GPL (Gaz de Pétrole Liquéfié) ou au GNV (Gaz Naturel pour Véhicules).

De nombreux autres modes de réalisation du système 2 et du procédé de la figure 2 sont possibles. Par exemple, au lieu d'utiliser l'identifiant VIN, le numéro d'immatriculation du véhicule peut être utilisé en tant qu'identifiant de ce véhicule. De façon plus générale, tout identifiant permettant d'identifier de façon unique le véhicule parmi l'ensemble des véhicules dont les caractéristiques techniques sont enregistrées dans la base 44, peut être utilisé dans le système 2 en lieu et place de l'identifiant VIN.

Le système 2 a été décrit dans le cas particulier où les caractéristiques techniques identifiées sont utilisées pour la gestion de l'intervention d'un service d'urgence. Toutefois, les applications du système 2 ne se limitent pas à celle-ci. Par exemple, les caractéristiques techniques identifiées par le système 2 peuvent être utilisées par un centre de gestion d'une flotte de véhicules ou pour d'autres activités nécessitant la connaissance de certaines caractéristiques des véhicules d'un parc automobile.

En variante, le centre collecteur 14 de l'ensemble des appels et le centre d'intervention 50 peuvent être fusionnés en un seul centre.

De même, en variante, le centre d'informations constructeur 16 peut envoyer directement la réponse au centre 50 au moins en ce qui concerne les renseignements qui n'ont pas besoin d'être traités par le centre collecteur des appels 14.

Enfin, le système 2 a été décrit dans le cas particulier où chacun des véhicules du parc est équipé d'une unité télématique. En variante, seul un ou quelques uns parmi l'ensemble des véhicules du parc sont équipés de l'unité télématique.

## Revendications

1. Système d'identification automatique (2) à distance des caractéristiques techniques d'un véhicule automobile (4, 6) déterminé parmi l'ensemble des véhicules automobiles d'un parc automobile, ce système comportant :
- au moins une unité télématique embarquée (20) dans le véhicule automobile déterminé, cette unité télématique étant propre à envoyer un identifiant du véhicule automobile à un centre collecteur (14) des appels de l'ensemble des véhicules du parc automobile par l'intermédiaire d'une liaison sans fil (22) et d'un réseau grande distance (10) de transmission d'informations, et
- le centre collecteur (14) des appels, ce centre étant propre à identifier au moins une caractéristique du véhicule automobile à partir de l'identifiant du véhicule, **caractérisé en ce que** le centre collecteur (14) des appels est adapté pour envoyer, en réponse à la réception de l'identifiant du véhicule, une requête d'obtention des caractéristiques techniques du véhicule automobile déterminé à un centre (16) d'informations constructeur par l'intermédiaire du réseau (10) grande distance, cette requête contenant l'identifiant du véhicule automobile déterminé, et **en ce que** le système (2) comprend :
- une base (44) de données constructeur associant à chaque identifiant d'un véhicule automobile du parc les caractéristiques techniques de ce véhicule, et
- le centre (16) d'informations constructeur, ce centre étant adapté, en réponse à la requête d'obtention des caractéristiques techniques, pour sélectionner automatiquement, dans la base de données constructeur (44), les caractéristiques techniques du véhicule automobile associées à l'identifiant reçu, et à envoyer une réponse à la requête contenant les caractéristiques techniques sélectionnées.

2. Système selon la revendications 1, **caractérisé en ce qu'**il comporte au moins un capteur embarqué (28, 30, 32) dans le véhicule automobile déterminé, et **en ce que** l'unité télématique embarquée (20) est apte à envoyer en plus de l'identifiant du véhicule automobile les informations mesurées par le capteur embarqué.

3. Système selon l'une quelconque des revendications précédentes, **caractérisé en ce que** le centre (16) d'informations constructeur est apte à envoyer sa réponse directement vers le centre collecteur (14) des appels et **en ce que** le centre collecteur (14) des appels est apte à rediriger automatiquement cette réponse vers un centre (50) de gestion du parc automobile agissant en fonction des caractéristiques techniques du véhicule automobile reçues.

4. Système selon l'une quelconque des revendications précédentes, **caractérisé en ce qu'**une unité télématique (20) est embarquée dans chacun des véhicules automobiles du parc.

5. Système selon l'une quelconque des revendications précédentes, **caractérisé en ce que** les caractéristiques techniques à identifier sont choisies dans un groupe comprenant le type de motorisation du véhicule automobile, le nombre de coussins de sécurité gonflables, l'emplacement de ces coussins de sécurité gonflables dans le véhicule automobile, le nombre de portes latérales, l'absence ou la présence d'un toit ouvrant.

6. Centre collecteur (14) des appels adapté pour être utilisé dans un système (2) conforme à l'une quelconque des revendications précédentes, **caractérisé en ce que**, en réponse à la réception de l'identifiant d'un véhicule déterminé, le centre collecteur (14) des appels est adapté pour envoyer une requête d'obtention des caractéristiques techniques du véhicule automobile déterminé au centre (16) d'informations constructeur par l'intermédiaire du réseau (10) grande distance, cette requête contenant l'identifiant du véhicule automobile déterminé.

7. Centre d'informations (16) constructeur adapté pour être utilisé, dans un système (2) conforme à l'une quelconque des revendications 1 à 5, **caractérisé en ce que** le centre (16) d'informations constructeur est adapté en réponse à la requête d'un centre collecteur d'appel (14) d'obtention des caractéristiques techniques, pour sélectionner automatiquement les caractéristiques techniques du véhicule automobile associées à l'identifiant reçu dans la base de données constructeur (42), et à envoyer une réponse à la requête contenant les caractéristiques techniques sélectionnées.

8. Procédé d'identification automatique des caractéristiques techniques d'un véhicule automobile déterminé parmi l'ensemble des véhicules automobiles d'un parc automobile, dans lequel :
- une unité télématique (20) embarquée dans le véhiculé automobile déterminé envoie (en 66) un identifiant du véhicule automobile à un centre collecteur (14) des appels de l'ensemble des véhicules automobiles du parc par l'intermédiaire d'une liaison sans fil (22) et d'un réseau (10) grande distance de transmission d'informations, **caractérisé en ce que**
- en réponse, le centre collecteur (14) des appels envoie (en 68) une requête d'obtention des caractéristiques techniques du véhicule automobile déterminé à un centre (16) d'informations constructeur par l'intermédiaire du réseau (10) grande distance, cette requête contenant l'identifiant du véhicule automobile déterminé, et
- le centre (16) d'informations constructeur, en réponse à cette requête, sélectionne automatiquement (70) les caractéristiques du véhicule automobile associées à l'identifiant reçu dans une base (42) de données constructeur associant chaque identifiant d'un véhicule automobile du parc aux caractéristiques correspondantes de ce véhicule automobile, et envoie (72) une réponse contenant les caractéristiques techniques sélectionnées.

## Claims

1. A system for remotely automatically identifying (2) the technical characteristics of an automotive vehicle (4, 6) determined out of all the automotive vehicles of a vehicle fleet, wherein the system comprises:
- at least one onboard telematic unit (20) in the determined automotive vehicle, the telematic unit being able to send an identifier of the automotive vehicle to a collecting centre (14) for collecting calls from all the vehicles of the vehicle fleet through a wireless link (22) and a wide area network (10) for transmitting information, and
- the call collecting centre (14), the centre being able to identify at least one characteristic of the automotive vehicle based on the vehicle identifier,
**characterised in that** the call collecting centre (14) is adapted for sending, in response to receiving the vehicle identifier, a request for obtaining the technical characteristics of the determined automotive vehicle to a manufacturer information centre (16) through the wide area network (10), this request containing the identifier of the determined automotive vehicle, and **in that** the system (2) comprises:
- a manufacturer data base (44) combining each identifier of an automotive vehicle in the fleet with the technical characteristics of this vehicle, and
- the manufacturer information centre (16), this centre being adapted, in response to the request for obtaining the technical characteristics, for automatically selecting, from the manufacturer data base (44), the technical characteristics of the automotive vehicle combined to the received identifier, and for sending a response to the request containing the selected technical characteristics.

2. The system according to claim 1, **characterised in that** it comprises at least one onboard sensor (28, 30, 32) in the determined automotive vehicle, and **in that** the onboard telematic unit (20) is able to send in addition to the identifier of the automotive vehicle, the information measured by the onboard sensor.

3. The system according to any of the preceding claims, **characterised in that** the manufacturer information centre (16) is able to send its response directly to the call collecting centre (14) and **in that** the call collecting centre (14) is able to automatically redirect this response to a centre (50) for managing the automotive fleet acting depending on the technical characteristics of the automotive vehicle which are received.

4. The system according to any of the preceding claims, **characterised in that** a telematic unit (20) is onboard each automotive vehicle of the fleet.

5. The system according to any of the preceding claims, **characterised in that** the technical characteristics to be identified are selected in a group comprising the motorisation type of the automotive vehicle, the number of airbags, the locations of these airbags within the automotive vehicle, the number of side doors, the absence or presence of a sunroof.

6. A call collecting centre (14) suitable for use in a system (2) in accordance with any one of the preceding claims, **characterised in that**, in response to receiving the identifier of a determined vehicle, the call collecting centre (14) is adapted for sending a request for obtaining the technical characteristics of the determined automotive vehicle to the manufacturer information centre (16) through the wide area network (10), such request containing the identifier of the determined automotive vehicle.

7. A manufacturer information centre (16) adapted for being used in a system (2) in accordance with any one of claims 1 to 5, **characterised in that** the manufacturer information centre (16) is adapted for, in response to the request of a call collecting centre (14) for obtaining the technical characteristics, automatically selecting the technical characteristics of the automotive vehicle combined with the identifier received in the manufacturer data base (42), and for sending a response to the request containing the selected technical characteristics.

8. A method for automatically identifying the technical characteristics of an automotive vehicle determined among all the automotive vehicles of an automotive fleet, wherein:
- a telematic unit (20) onboard the determined automotive vehicle sends (66) an identifier of the automotive vehicle to a centre (14) for collecting the calls of all the automotive vehicles of the fleet through a wireless link (22) and a wide area network (10) for transmitting information, **characterised in that**
- in response, the call collecting centre (14) sends (68) a request for obtaining the technical characteristics of a determined automotive vehicle to a manufacturer information centre (16) through the wide area network (10), such request containing the identifier of the determined automotive vehicle, and
- the manufacturer information centre (16), in response to this request, automatically selects (70) the characteristics of the automotive vehicle combined with the identifier received in a manufacturer data base (42) combining each identifier of an automotive vehicle of the fleet with the corresponding characteristic of this automotive vehicle, and sends (72) a response containing the selected technical characteristics.

## Patentansprüche

1. System zur automatischen Identifizierung (2) aus der Ferne der technischen Merkmale eines bestimmten Kraftfahrzeugs (4, 6) aus der Gruppe von Kraftfahrzeugen eines Fuhrparks, wobei dieses System Folgendes umfasst:
- mindestens eine eingebaute telematische Einheit (20) in dem bestimmten Kraftfahrzeug, wobei diese telematische Einheit dazu geeignet ist, einen Identifikator des Kraftfahrzeugs an ein Datensammelzentrum (14) der Aufrufe der Gesamtheit der Fahrzeuge des Fuhrparks mit Hilfe einer drahtlosen Verbindung (22) und eines großflächigen Netzes (10) zur Übertragung von Informationen zu schicken, und
- das Datensammelzentrum (14) der Aufrufe, wobei dieses Zentrum dazu geeignet ist, mindestens ein Merkmal des Kraftfahrzeugs ausgehend von dem Identifikator des Fahrzeugs zu identifizieren, **dadurch gekennzeichnet, dass** das Datensammelzentrum (14) der Aufrufe dazu angepasst ist, in Antwort auf den Empfang des Identifikators des Fahrzeugs eine Anfrage zum Erhalt der technischen Merkmale des bestimmten Kraftfahrzeugs an ein Zentrum (16) für Herstellerinformationen mit Hilfe des großflächigen Netzes (10) zu schicken, wobei diese Anfrage den Identifikator des bestimmten Kraftfahrzeugs umfasst, und dadurch, dass das System (2) Folgendes umfasst:
- eine Datenbank (44) der Hersteller, die mit jeden Identifikator eines Kraftfahrzeugs des Fuhrparks die technischen Merkmale dieses Fahrzeugs assoziiert, und
- das Zentrum (16) für Herstellerinformationen, wobei dieses Zentrum dazu angepasst ist, in Antwort auf die Anfrage zum Erhalt der technischen Merkmale automatisch aus der Datenbank der Hersteller (44) die technischen Merkmale des Kraftfahrzeugs auszuwählen, die mit dem erhaltenen Identifikator assoziiert sind und eine Antwort auf die Anfrage zu schicken, die die ausgewählten technischen Merkmale enthält.

2. System nach Anspruch 1, **dadurch gekennzeichnet, dass** es mindestens einen eingebauten Sensor (28, 30, 32) in dem bestimmten Kraftfahrzeug umfasst und dadurch, dass die eingebaute telematische Einheit (20) dazu geeignet ist, außer dem Identifikator des Kraftfahrzeugs die Informationen zu schicken, die vom eingebauten Sensor gemessenen werden.

3. System nach einem der vorhergehenden Ansprüche, **dadurch gekennzeichnet, dass** das Zentrum (16) für Herstellerinformationen dazu geeignet ist, seine Antwort direkt an das Datensammelzentrum (14) der Aufrufe zu schicken, und dadurch, dass das Datensammelzentrum (14) der Aufrufe dazu angepasst ist, diese Antwort automatisch an ein Zentrum (50) zur Verwaltung des Fuhrparks weiterzuleiten, das je nach den erhaltenen technischen Merkmalen des Kraftfahrzeugs handelt.

4. System nach einem der vorhergehenden Ansprüche, **dadurch gekennzeichnet, dass** eine telematische Einheit (20) in jedes der Kraftfahrzeuge des Fuhrparks eingebaut ist.

5. System nach einem der vorhergehenden Ansprüche, **dadurch gekennzeichnet, dass** die zu identifizierenden technischen Merkmale aus einer Gruppe gewählt werden, umfassend die Art der Motorisierung des Kraftfahrzeugs, die Anzahl der Airbags, die Anordnung der Airbags im Kraftfahrzeug, die Anzahl der seitlichen Türen, das Vorhandensein oder Nichtvorhandensein eines Schiebedachs.

6. Datensammelzentrum (14) der Aufrufe, dazu angepasst, um in einem System (2) gemäß einem der vorhergehenden Ansprüche verwendet zu werden, **dadurch gekennzeichnet, dass** in Antwort auf den Erhalt des Identifikators eines bestimmen Fahrzeugs das Datensammelzentrum (14) der Aufrufe dazu angepasst ist, eine Anfrage zum Erhalt der technischen Merkmale des bestimmten Kraftfahrzeugs an das Zentrum (16) für Herstellerinformationen mit Hilfe des großflächigen Netzes (10) zu schicken, wobei diese Anfrage den Identifkator des bestimmten Kraftfahrzeugs enthält.

7. Zentrum (16) für Herstellerinformationen, dazu angepasst, um in einem System (2) gemäß einem der Ansprüche 1 bis 5 verwendet zu werden, **dadurch gekennzeichnet, dass** das Zentrum (16) für Herstellerinformationen dazu angepasst ist, in Antwort auf die Anfrage eines Datensammelzentrums der Aufrufe (14) zum Erhalt der technischen Merkmale automatisch die technischen Merkmale des Kraftfahrzeugs auszuwählen, die mit dem Identifikator assoziiert sind, der in der Datenbank der Hersteller (42) erhalten wird, und eine Antwort auf die Anfrage zu schicken, die die ausgewählten technischen Merkmale enthält.

8. Verfahren zur automatischen Identifizierung der technischen Merkmale eines bestimmten Kraftfahrzeugs aus der Gesamtheit der Kraftfahrzeuge, wobei:
- eine telematische Einheit (20), eingebaut in dem bestimmten Kraftfahrzeug, einen Identifikator des Kraftfahrzeugs an ein Datensammelzentrum (14) der Aufrufe der Gesamtheit der Kraftfahrzeuge des Fuhrparks mit Hilfe einer drahtlosen Verbindung (22) und eines großflächigen Netzes (10) zur Übertragung von Informationen schickt (in 66), **dadurch gekennzeichnet, dass**:
- in Antwort das Datensammelzentrum (14) der Aufrufe eine Anfrage zum Erhalt der technischen Merkmale des bestimmten Kraftfahrzeugs an ein Zentrum (16) für Herstellerinformationen mit Hilfe des großflächigen Netzes (10) schickt (in 68), wobei diese Anfrage den Identifikator des bestimmten Kraftfahrzeugs enthält, und
- das Zentrum (16) für Herstellerinformationen in Antwort auf diese Anfrage automatisch (70) die Merkmale des Kraftfahrzeugs auswählt, die mit dem Identifikator assoziiert sind, der in einer Datenbank (42) des Herstellers erhalten wurde, die jeden Identifikator eines Kraftfahrzeugs des Fuhrparks mit den entsprechenden Merkmalen dieses Kraftfahrzeugs assoziiert, und eine Antwort, die die ausgewählten technischen Merkmal enthält, schickt (72).
